(19) Europäisches Patentamt
European Patent Office
Office européen des brevets

(11) **EP 4 495 288 A1**

(12) **EUROPEAN PATENT APPLICATION**

(43) Date of publication:
**22.01.2025 Bulletin 2025/04**

(21) Application number: **23186148.5**

(22) Date of filing: **18.07.2023**

(51) International Patent Classification (IPC):
*C23C 18/12* $^{(2006.01)}$   *C09D 5/14* $^{(2006.01)}$

(52) Cooperative Patent Classification (CPC):
**C23C 18/1208; B01J 21/063; B01J 35/39;
B01J 37/036; C09D 1/00; C09D 5/00; C09D 5/14;**
B01J 23/06; B01J 23/30

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **AM Technology Srl
20125 Milano (MI) (IT)**

(72) Inventors:
- **Cianci, Antonio
  Milan (IT)**
- **Bernardoni, Massimo
  Rome (IT)**

(74) Representative: **Dragotti & Associati S.R.L. et al
Via Nino Bixio, 7
20129 Milano (IT)**

(54) **SOL-GEL PHOTOCATALYTIC TRANSPARENT WATER- BASED COATING**

(57)  Sol-gel photocatalytic transparent coating composition, which comprises: (a) at least one water solvent; (b) at least one photocatalyst precursor (TTIP); (c) at least one non-ionic surfactant (d) at least one epoxy silane; (e) at least one chelating agent (f) at least one inorganic acid; (g) at least one an inorganic salt; Such composition can be used with conventional means, such as spray coating and ensures a highly trasparent photocatalytic coating with very low thickness that can be applied on several substrates which is stable over time with good resistance also to weathering agents and with relative low quantities of photocatalyst, generally lower than 10% by weight.

**Figure 1**

**Description**

The present invention regards a photocatalytic sol-gel transparent water based coating for industial and architecture applications, with applications, in the automotive sector, in the furniture industry, in metal materials for civil applications, such as metal cladding, glass surfaces, and packaging also for food products.

Photocatalysis is a natural phenomenon that regards some substances, known as photocatalysts, which - when irradiated with light of suitable wavelength - are capable of catalysing some chemical reactions.

In particular, the presence of air and light, oxidative processes are activated on a surface containing a photocatalytic substance that lead to the transformation and/or decomposition of organic and inorganic polluting substances (microbes, nitrogen oxides, polycondensate aromatic products, benzene, sulfur dioxide, carbon monoxide, formaldehyde, acetaldehyde, methanol, ethanol, benzene, ethylbenzene, methylbenzene, nitrogen monoxide and dioxide). Such polluting and/or toxic substances are transformed, through the photocatalysis process, into innocuous substances that can be washed away by rain water or via washing, such as sodium nitrate ($NaNO$), calcium sulfate ($CaSO_4$), calcium nitrate ($Ca(NO_3)$) and calcium carbonate ($CaCO_3$).

Photocatalytic processes can then be used for considerably reducing the pollutants present in the environment, such as those produced by the exhaust gases of automobiles, factories, home heating and other sources, and at the same time eliminate dirt, mold, and bacteria that degrade the external surfaces of buildings or other structures.

The photocatalysts are generally metal compounds such as titanium dioxide, $TiO$, the most active and most used, zinc oxide, $ZnO$, and other oxides and sulfides ($CeO_2$, $ZrO_2$, $SnOz$, $CdS$, $ZnS$, etc.).

Much effort has been expended to provide compositions containing a photocatalyst to be used for coating building surfaces, which can be applied with the means commonly employed in the building industry; such compositions ensure a significant and enduring photocatalytic effect, simultaneously ensuring a satisfactory aesthetic effect, as well as of course at non-excessive costs, so as to allow the application thereof on a large scale.

Known in the art are cement-based compositions which comprise a photocatalyst.

In particular, we started from the technology identified by the following patents WO 2015/145375 A1 (Cement-Based Photocatalytic Composition, And Use Thereof For Obtaining Water Paints, In Particular For Outdoor Applications), and WO 2016/207697 A1 (Photocatalytic Composition Based On An Aerial Binder And Use Thereof For The Production Of Water-Based Paints, In Particular For Interior Applications) and WO 2018/002603 A1 (Photocatalytic Compositions, And Uses Thereof For Obtaining Water Paints). These aforementioned technologies make it possible to create an opaque, cement-based, stable, high-performance paint.

One area not covered by these technological solutions is that of transparent coatings. The cement matrix and the use of the bulk components of the previous solutions, in fact, leads to an opaque solution, which is not suitable for the realisation of a transparent coating for industrial and civil applications.

Transparent coatings are important because they are applied to surfaces that already have a defined finish (metals, plastics, natural materials such as wood) or are themselves transparent (glass, transparent plastics).

The aim of the invention is therefore to develop a transparent coating that retains the functionality of cement-based coatings, but with a transparent matrix.

According to some prior art like Photocatalysis: Basic Principles, Diverse Forms of Implementations and Emerging Scientific Opportunities, Shasha Zhu, Dunwei Wang (Zhu, S., Wang, D., Adv. Energy Mater. 2017, 7, 1700841), the photocatalytic product is usually incorporated in formulations of paints or varnishes with substantially organic base of conventional type. Nevertheless, such formulations, given that they are of organic nature, undergo the action of transformation and/or decomposition catalysed by the photocatalyst, so that the properties of the applied coating are degraded over time, with detachment and pulverization phenomena, as well as causing a quick decay of the original photocatalytic properties.

Also known in the art are cement-based compositions which comprise a photocatalyst. For example, in the patent application WO 2009/013337, photocatalytic compositions are described which comprise: a hydraulic binder; a polycarboxylic or acrylicsuperfluidizing agent; a cellulose ether with viscosity comprised between 10,000 and 120,000 Pas; an adhesive agent; a calcareous, silicic or silicocalcareous filler; a photocatalyst. The preferred photocatalyst is titanium dioxide ($TiO$,), at least partially ni the form of anatase, or its precursor. Such compositions would be provided with rheological properties such to render them particularly suitable for the application on large surfaces, without dripping or deformations. A cement mortar containing the composition, homogeneously mixed with water, is disclosed. Water in a weight ratio ni therange between 0.2 and 0.8, with respect to the hydraulic binder, ni the cement mortar, is disclosed. WO 2009/013337 is the closest prior art. In the patent application WO 2013/018059, a photocatalytic powder paint isdescribed for use diluted in water, which comprises: Portland cement combinedwith photocatalytic titanium dioxide in nanoparticle form; a calcareous inert substance with maximum particle size lower than 100 mm, cellulose with viscosity lower than 1000 mPas; a fluidizing agent; an anti-foaming agent; a vinyl polymer; pigments. Such composition also comprises at least one of the following additives: metakaolin, calcium formate and diatomaceous earth. Use of the paint on various interior and exterior surfaces is disclosed. It was therefore necessary to find a technology that could overcome the above limitations, even in the absence of the stable inorganic matrix provided by the cementitious base described in the previous prior art. In addition, work was carried out to find a solution that would also allow the development of antiviral capacity, which has already been achieved with cement-based technology.

The choice was directed towards the so-called sol-gel technology.

Sol-gel are made by means of a wet-chemical process that involves the formation of an inorganic colloidal suspension (sol) and gelation of the sol in a continuous liquid phase (gel) to form a three-dimensional network structure. Compared to organic polymers, sol-gel material is chemically, photochemically, thermally, and mechanically stable; therefore, it is convenient for applications in harsh environments. Sol-gel material is also optically transparent (down to 250 nm).

Sol-gel material is formed at low temperature and under mild chemical conditions, allowing the entrapment of molecules with poor thermal and chemical stability.

Sol-gel technology is being increasingly used for a large number of applications and it looks promising as a base for the development of a new coating which can host the properties we want to expand to a transparent functional coating.

Sol-gel is one of the most widely used wet-chemical methods due to its efficacy in providing high-purity inorganic oxides and hybrid inorganic-organic coatings (Nassar et al., 2011). The sol-gel process is a simple hydrolysis-condensation process by which a variety of high-purity metal oxide as well as organic-inorganic hybrid systems can be prepared. The coatings formed by sol gel reactions are generally transparent due to their nanosized dimension. A typical sol-gel reaction starts with the hydrolysis of a metal salt or metalorganic precursor (e.g., metal alkoxide) followed by extensive condensation reactions leading to extended metal oxide frameworks. The advantages of the sol-gel process is the ease with which it can prepare organic-inorganic frameworks (Marini et al., 2007), mixed oxide systems (Sivakumar et al., 2004), and doped systems (Padmanabhan et al., 2007; Sibu et al., 2002).

Based on these studies, solgel technology was identified as the most promising technology to extend the application range of the previously developed technology. It is in fact a transparent mineral matrix, which has all the characteristics to host the active ingredients in a stable manner and at a low production cost, to be used as a coating in industrial applications, especially in the automotive sector, in the architectural sector, for application on metal walls (cladding) or glass curtain walls, or in other industrial sectors (furniture elements, plastic materials, packaging).

The Applicant has faced the technical problem of providing a sol-gel photocatalytic composition, usable for obtaining a coating with very low thickness and highly transparency with low cost and low temperature production process, in particular for indoor and outdoor applications, which is capable of:

(a) ensuring a highly trasparent photocatalytic coating with very low thickness that can be applied on several substrates;
(b) ensuring a high photocatalytic effect that is stable over time, also with relative low quantities of photocatalyst, generally lower than 10% by weight;
(c) allowing the application of the coating with conventional means, such as those used for common spray coating works, with optimal results in terms of uniformity of the coating and resistance of the same to weathering agents, and also, alternatively, with dipping method.
(d) using products devoid of toxic or dangerous effects, without using heavy metals, with the aim to obtain a product with a content of volatile organic compounds (VOC) lower than 0.4 g/l.

These and further objects that will be better illustrated hereinbelow have been achieved by the present inventors by means of a sol-gel transparent photocatalytic coating as defined in the following description and enclosed claims, which allows obtaining, in addition to the above-described results, an improved anti-fouling, anti-bacteria and anti-virals property thanks to the combination of the Titanium Dioxide and the addition of the silver nitrate.

The coating as described guarantee also a high hydrophilia and self-cleaning of the surface.

**Definitions**

Unless otherwise defined, all terms of art, notations and other scientific terminology used herein are intended to have the meanings commonly understood by those of skill in the art to which this disclosure pertains. In some cases, terms with commonly understood meanings are defined herein for clarity and/or for ready reference; thus, the inclusion of such definitions herein should not be construed to represent a substantial difference over what is generally understood in the art.

The term "photocatalyst precursor" refers to a compound which, once in contact with water release the photocatalyst; for instance, titanium isopropoxide is a photocatalyst precursor of titanium dioxide.

The terms "approximately" and "about" herein refers to the range of the experimental error, which may occur in a measurement.

The terms "comprising", "having", "including" and "containing" are to be construed as open-ended terms (i.e. meaning "including, but not limited to") and are to be considered as providing support also for terms as "consist essentially of', "consisting essentially of", "consist of" or "consisting of".

The terms "consist essentially of", "consisting essentially of" are to be construed as a semi-closed terms, meaning that no other ingredients which materially affects the basic and novel characteristics of the invention are included (optional excipients may thus included).

The terms "consists of', "consisting of" are to be construed as closed terms.

In a first aspect, the present invention therefore regards a sol-gel photocatalytic transparent coating, which comprises:

> (a) at least one water solvent (water);
> (b) at least one photocatalyst precursor (TTIP);
> (c) at least one nonionic surfactant (Triton X or Tergitol ™ 15-S-9);
> (d) at least one epoxy silane;
> (e) at least one chelating agent;
> (f) at least one inorganic acid;
> (g) optionally at least one an inorganic salt.

Preferably, the sol-gel photocatalytic coating comprises:

> (a) from 45 to 99% by weight, more preferably from 60 to 98.5% by weight, of at least one water solvent;
> (b) from 0.5 to 35% by weight, more preferably from 0.8 to 8% by weight, of at least one photocatalyst precursor ;
> (c) from 0.0002 to 5% by weight, more preferably from 0.005 to 3% by weight, of at least one nonionic surfactant;
> (d) from 0.06 to 12% by weight, more preferably from 0.1 to 4% by weight, of at least one epoxy silane;
> (e) from 0.02 to 30% by weight, more preferably from 0.05 to 10% by weight, of at least one chelating agent;
> (f) from 0.05 to 10% by weight, more preferably from 0.1 to 5% by weight, of at least one inorganic acid;
> (g) optionally from 0.005 to 3% by weight, more preferably from 0.009 to 2% by weight, of at least one inorganic salt.

In the scope of the present description and of the enclosed claims, the quantities of the various components of the photocatalytic sol-gel are expressed, except where differently indicated, as percentages by weight with respect to the overall weight of the composition itself.

In a second aspect, the present invention regards the use of a sol-gel photocatalytic transparent coating as defined above for coating several substrates (PVC, glass, ceramic, metals, alloy, leather, fabric etc.) in order to reduce the presence of polluting agents both chemicals and biologicals.

Preferably, the water solvent (a) is distilled water so that there is less risk of contamination.

As regards the photocatalyst precursor (b), it may be selected from titanium isopropoxide, titanyl chloride, titanium alcoxides, tungsten compounds, zinc compounds; preferably it is titanium isopropoxide, more preferably with a purity of at least 97%.

The nonionic surfactant (c) is preferably a secondary alcohol ethoxylate, such as Triton X or Tergitol 15-S-9 , more preferably with a Surface Tension (1% actives, 25 °C) of 30 dynes/cm, Cloud Point (1 wt% actives aqueous solution) of 60°C, CMC (25°C) of 52PPM and a Foam Height - Initial (0.1 wt% actives) of 124mm.

The epoxy silane (d) is preferably (3-Glycidyloxypropyl)trimethoxysilane, more preferably with a density of 1.07 g/mL at 25 °C (lit.), a boiling point of 120 °C/2 mmHg (lit.), with refractive index of n20/D 1.429 (lit.)

The chelating agent (e) may be selected from acetyl acetone, diols and carboxylic acids such as acetic acid; preferably it is acetic acid, more preferably pure acetic acid with an assay of 99.8%, an autoignition temperature of 426.6°C, a density of 1.049 g/mL at 25 °C (lit.), a melting point of 1.049 g/mL at 25 °C (lit.) and a biling point of 117-118 °C (lit.).

The inorganic acid (f), may be nitric acid, preferably pure nitric acid, more preferably with an assay higher or equal than 65%, in liquid form, vapour pressure of 8 mmHg ( 20 °C), a pH < 1.0, a boiling point of 120.5 °C (lit.) and a density of 1.37-1.41 g/mL at 20 °C (lit.).

The optional inorganic salt (g), may be silver nitrate ($AgNO_3$), preferably with a purity of 99,0%, free of acid, with a melting point of 212 °C (dec.) (lit.).

The sol-gel photocatalytic composition in accordance with the present invention can also comprise further additives commonly used in this product type, such as for example Neodymium trinitrate hexahydrate, silica oxide, aluminium oxide, etc

The photocatalytic composition in accordance with the present invention can be produced in accordance with known techniques, via mixing of the various components in a specific order and method:

The preparation phase is divided into two stages:

> (a) Preparation of the concentrate:

(b) Preparation of the aqueous solution

The preparation of the concentrate involves the addition, under stirring, of the photocatalyst precursor, such as titanium isopropoxide (TTIP), in acetic acid. Leave the solution to stir for the next 30 minutes. This operation illustrated hereinabove requires a protected atmosphere.

To prepare the aqueous solution, the following substances are added under stirring:

    (a) nonionic surfactant
    (b) inorganic compound
    (c) inorganic acid

Ance added then stir the solution for the next 30 minutes.

When the two preparations have been completed, add the aqueous solution to the concentrate while stirring. Heat the solution for about 3 hours at 90 °C, while stirring. Once the solution has cooled, add the epoxy silane while stirring.

The application of the sol-gel photocatalytic transparent coating can be used with conventional means, such as airless pumps, dipping, etc. The application can occur on various type of substrates, such as wood, metals, glass, PVC, leather, fabric, ceramic, etc. After application and drying, the thickness of the photocatalytic composition layer can vary within wide limits depending on the application method.

**EXPERIMENTAL RESULTS**

The first important fact that can be drawn from the results obtained is that there is a good reproducibility of the effect of the sol gel treatment even if deposited on very different surfaces (steel, glass and polymer), confirming that the treatment is able to adhere to a wide range of substrates.

The sol-gel photocatalytic composition used in the experiments reported below had the following qualitative-quantitative composition:

| | |
|---|---|
| (a) water: | 95.00% |
| (b) titanium isopropoxide: | 3.00% |
| (c) triton X: | 0.05% |
| (d) 3-glycidyloxypropyltrimethoxysilane: | 0.75% |
| (e) acetic acid: | 0.60% |
| (f) nitric acid: | 0.60% |

Below are the results for the characteristic properties.

*Calculation of antiviral activity*

The most important novelty is the characteristic of the sol-gel thus formulated to be effective against covid-19 (Sars-Cov2) as can be seen from the experimental results below. The following test to evaluate the antiviral activity of a textile product according to the standard ISO 18184:2019 "Textiles - Determination of antiviral activity of textile products" using SARS-CoV-2_COV2019 ITALY/INMI1 as viral strain. The normative reference used was the standard - ISO 18184:2019 "Textiles - Determination of antiviral activity of textile products" modified with the use of led lights positioned 15 cm away from the treated sample.

    (a) Treated sample: 20×20 mm
    (b) Untreated sample: 20×20 mm
    (c) The treated sample was exposed to UVA illumination throughout the test using spotlights placed at a distance of 15 cm
    (d) All samples were sterilized at 121 °C for 15 min
    (e) Test inoculum volume: 200 ul

M is the viral activity reduction index of the untreated surface (after 2 h) $M_v$ is the antiviral activity evaluation index of the treated surface.

The material's own antiviral activity (without treatment) is calculated using the following formula:

$$M = Log\ (Va) - Log\ (Vb)$$

The antiviral activity of the treatment is calculated using the following formula

$$M_V\ (T2) = Log\ (Va) - Log\ (Vc)$$

$$M_V\ (T6) = Log\ (Vd) - Log\ (Ve)$$

Where:

| | |
|---|---|
| M | is the viral activity reduction index of the material surface (after 2 h) |
| $M_v$ | is the antiviral activity evaluation index of the treated surface |
| Log (Va) | is the logarithm of the mean TCID50[1] of the three replicates at time T0 detected on the untreated surface |
| Log (Vb) | is the logarithm of the mean TCID50 of the three replicates at time T2 detected on the untreated surface |
| Log (Vc) | is the logarithm of the mean TCID50 of the three replicates at time T2 detected on the treated surface |
| Log (Vd) | is the logarithm of the mean TCID50 of the three replicates at time T6 detected on the untreated surface |
| Log (Ve) | is the logarithm of the mean TCID50 of the three replicates at time T6 detected on the treated surface |

It is important to note that the ISO 18184:2019 requires the determination of Mv only after 2 hours. The assessment after 6 hours was included in the laboratory test method to provide additional elements for evaluation.

These are the reference values. If the MV value is above 3.0, the result is excellent.

| | |
|---|---|
| $M_v < 2.0$ | LOW |
| $2.0 < M_v < 3.0$ | GOOD |
| $3.0 < M_v$ | EXCELLENT |

The inoculum concentration is characterized by Log $TCID_{50}$ = 6.63.

Here are the results:

*Inherent antiviral efficacy (Test on untreated material)*

| Time | Avg. Log $TCID_{50}$/ml Log (Va) | M |
|---|---|---|
| T0 | 5.33 | N/A |
| T2 | 4.58 | 0.75 |
| T6 | 3.42 | 1.91 |

*Evaluation of antiviral treatment efficacy*

| Time | Avg. Log $TCID_{50}$/ml Log (Vc) | $M_v$ | % vs T0 |
|---|---|---|---|
| T0 | 5.33 | N/A | N/A |

(continued)

| Time | Avg. Log TCID$_{50}$/ml Log (Vc) | M$_v$ | % vs T0 |
|---|---|---|---|
| T2 | 1.50 | 3.83 | 99.99 |
| T6 | 1.50 | 3.83 | 99.99 |

From the measurements taken, the result is excellent.

**Calculation of bacterial reduction**

Two measurements were made with regard to the antibacterial property. Sample specimens inoculated with the bacteria Staphylococcus aureus ATCC 6538 were subjected to activation.

(a) Microorganism: Staphylococcus aureus ATCC 6538
(b) Inoculum: Bacterial suspension, 1x 10° CFU/mL diluted in nutrient broth. 0.1 ml of the suspension was placed in contact with a specimen measuring 4cm × 4 cm. At the end of the contact time, the specimens were extracted with 20 ml of Neutraliser.
(c) Irradiation time: 4 h with UVA lamp at room temperature.
(d) Neutralising agent: 30 g/l azolectin, 30g/l Tween 80, 5g/l sodium thiosulphate, 1g/l-histidine, 0.68 g/l KH2PO4, (pH 7.2 +/- 0.2).
(e) Sterilisation of sample: no.

[0059] Following a quantitative antibacterial activity according to modified AATCC 100 - 2012 method, two methods have been used: irradiation only and irradiation and incubation.
The antibacterial activity of the samples is calculated as follows:

$$R = 100 \text{ x } [(B-A)/B]$$

where:

A = CFU/ml of the sample after irradiation time
B = CFU/ml of the untreated sample after the irradiation time.
R = percentage of reduction in the number of bacteria.

(CFU = United Colony Forming Units).
The results have been very interesting, with a reduction of over 99.99% of the bacterial count.

Table 2. AATCC 100 antibacterial activity after 4h irradiation (T4).

| Sample | UFC - TO | UFC - T4 |
|---|---|---|
| Not Treated | Avg 1,25x $10^5$ | Avg 2,53 x$10^4$ |
| Solgel | Avg 1,25x $10^5$ | Avg < 20 |

Result: % vs T0 = 99,99%

Table 3. AATCC 100 antibacterial activity after 4h irradiation (T4).

| Sample | UFC - TO | UFC - T4 |
|---|---|---|
| Not Treated | Avg 1,96x $10^5$ | Avg 1,27 x$10^4$ |
| Solgel | Avg 1,96x $10^5$ | Avg < 20 |

Result: % vs T0 = 99,99%

**Calculation of NO$_x$ reduction**

The second property tested is that of nitrogen oxide abatement. The test was carried out on a green fiberglass panel covered with solgel preparation.

Photocatalysis tests were performed in a 330 litre Glove Box Iteco, in 5 mm thick PMMA, without air exchange with the outside, polluted by the fumes of a cigarette burned inside the Glove Box.

During the tests, the values of NO, NO2 and NOx were monitored using an AC 32M (Environment S.A) analyzer with ppb sensitivity (Figure 5). Monitoring was extended for at least 60' after reaching the maximum NOx value.

NOx represent the sum of all nitrogen oxides, consisting mainly of NO and NO2, but also of any other oxides with a higher level of oxidation.

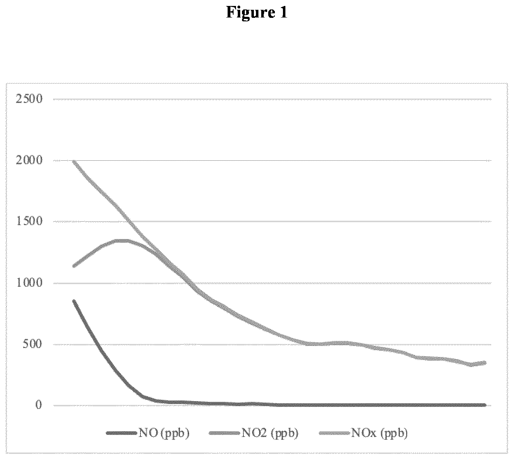

The first test, to be considered as "white" for comparison, was carried out in the absence of photocatalytic panel and in the absence of light. The test to evaluate the photocatalytic effect was carried out by inserting the green fiberglass panel of Figure 1 in the Glove Box and exposing the Glove Box to sunlight for the entire test time.

The experimental results are shown in Table 1, in which the values of each pollutant expressed in ppb are reported at 2-minute intervals.

*Table 1*

| Time (min) | NO (ppb) | NO2 (ppb) | NOx (ppb) |
|---|---|---|---|
| 0 | 853 | 1137 | 1990 |
| 2 | 646 | 1216 | 1863 |
| 4 | 449 | 1296 | 1744 |
| 6 | 290 | 1345 | 1634 |
| 8 | 165 | 1344 | 1509 |
| 10 | 73 | 1306 | 1379 |
| 12 | 37 | 1236 | 1273 |
| 14 | 28 | 1133 | 1160 |
| 16 | 23 | 1045 | 1068 |
| 18 | 18 | 929 | 947 |
| 20 | 15 | 850 | 865 |
| 22 | 12 | 793 | 805 |
| 24 | 10 | 727 | 738 |
| 26 | 14 | 674 | 687 |
| 28 | 7 | 622 | 629 |
| 30 | 3 | 574 | 576 |
| 32 | 1 | 536 | 538 |
| 34 | 2 | 504 | 506 |
| 36 | 5 | 499 | 504 |
| 38 | 4 | 507 | 512 |
| 40 | 4 | 509 | 514 |
| 42 | 1 | 497 | 498 |
| 44 | 2 | 469 | 472 |
| 46 | 1 | 457 | 458 |
| 48 | 0 | 430 | 431 |
| 50 | 0 | 393 | 394 |
| 52 | 2 | 383 | 385 |
| 54 | 0 | 382 | 383 |

(continued)

| Time (min) | NO (ppb) | NO2 (ppb) | NOx (ppb) |
|---|---|---|---|
| 56 | 0 | 361 | 360 |
| 58 | 0 | 329 | 333 |
| 60 | 0 | 349 | 351 |

Starting from these data, abatement diagrams have been elaborated, always calculating every 2 minutes the percentage of each pollutant with respect to the initial value.

The results of the "white" comparison test are shown in figure 1. It can be seen that the pollutants slowly decrease over time, without substantially changing the relative ratios.

It is very clear how the Clear Coat treatment determines an important photocatalytic effect, which can be outlined as follows:

a) overall, photocatalysis leads to a sharp decrease in all nitrogen oxides (NOx).
b) there is first a rapid oxidation of NO at NO2 and in fact initially the latter increase, and then decrease rapidly
c) during the oxidative processes connected to photocatalysis, other nitrogen oxides with a higher level of oxidation also develop, as evidenced by the fact that in some cases NOx exceeds the sum of NO and NO2, even if only slightly.
d) then further oxidation of NO2 occurs until, as widely explained in the scientific literature, the formation of the non-polluting species NO3- nitrate ion is reached.

As it can be seen for all types of pollutants, the photocatalytic effect is very evident and quantitatively important.

**Calculation of Hydrophilic property**

It should be remembered that a hydrophilic condition is considered important to determine the self-cleaning properties of surfaces, favoring the formation of a continuous film of water with a washing effect in case of rain or washing.

The tests to assess whether the sol gel treatment determines hydrophilic properties were carried out by depositing drops of water on surfaces treated differently and measuring the contact angle after lighting with a UV lamp with solar spectrum for 30 minutes (T1) and for 4 hours (T3). The lower the angle, the more hydrophilic the surface is. As can be seen after UV irradiation, treatment with TiO2-based Clear Coat solgel results in hydrophilic properties with a significant reduction in the contact angle (28°) compared to untreated panels (66°).

The two treatments based on hydrophobic silicon oxide (SiO2 and SiO2/N) determine higher contact angles (87° and 93° respectively).

Double treatment based on silicon oxide plus titanium oxide (SiO2+TiO2) maximizes hydrophobic properties (118° contact angle) for a complex mechanism of alternating hydrophobic and hydrophobic zones that deeply affect surface energy.

It can be concluded that the sol gel treatment is able to make the treated surfaces hydrophilic.

**Claims**

1. A sol-gel composition, which comprises:

(a) at least one water solvent;
(b) at least one photocatalyst precursor;
(c) at least one non-ionic surfactant;
(d) at least one epoxy silane;
(e) at least one chelating agent;
(f) at least one inorganic acid;
(g) optionally at least one an inorganic salt.

2. The sol-gel composition according to claim 1, which comprises:

(a) from 45 to 99% by weight, preferably from 60 to 98.5% by weight, of said at least one water solvent;
(b) from 0.5 to 35% by weight, preferably from 0.8 to 8% by weight, of said at least one photocatalyst precursor;
(c) from 0.0002 to 5% by weight, preferably from 0.005 to 3% by weight, of said at least one nonionic surfactant;

(d) from 0.06 to 12% by weight, preferably from 0.1 to 4% by weight, of said at least one epoxy silane;
(e) from 0.02 to 30% by weight, preferably from 0.05 to 10% by weight, of said at least one chelating agent;
(f) from 0.05 to 10% by weight, preferably from 0.1 to 5% by weight, of said at least one inorganic acid;
(g) optionally from 0.005 to 3 % by weight, preferably from 0.009 to 2 % by weight, of said at least one inorganic salt.

3. The sol-gel composition according to claim 2, **characterized by** consisting of components (a) to (f) or components (a) to (g).

4. The sol-gel composition according to anyone of the preceding claims, **characterized in that** said at least one water solvent is water, preferably distilled water.

5. The sol-gel composition according to anyone of the preceding claims, **characterized in that** said at least one photocatalyst precursor is selected from titanium isopropoxide, titanyl chloride, titanium alcoxides, tungsten compounds, zinc compounds, preferably titanium isopropoxide.

6. The sol-gel composition according to anyone of the preceding claims, **characterized in that** said at least one non-ionic surfactant is a secondary alcohol ethoxylate.

7. The sol-gel composition according to anyone of the preceding claims, **characterized in that** said at least one epoxy silane is 3-glycidyloxypropyltrimethoxysilane.

8. The sol-gel composition according to anyone of the preceding claims, **characterized in that** said at least one chelating agent is selected from acetyl acetone, diols, carboxylic acids, preferably acetic acid.

9. The sol-gel composition according to anyone of the preceding claims, **characterized in that** said at least one inorganic acid is selected from sulfuric acid, hydrochloric acid, phosphoric acid, sulfidric acid and nitric acid, preferably nitric acid.

10. The sol-gel composition according to anyone of the preceding claims, **characterized in that** said at least one an inorganic salt is silver nitrate.

11. Use of the sol-gel composition according to anyone of the preceding claims for reducing the presence of microbes, polluting substances and/or toxic substances in the atmosphere.

12. The use according to claim 11, **characterized in that** said microbes are selected from viruses and/or bacteria.

13. The use according to claim 11, **characterized in that** said polluting and/or toxic substances are selected from nitrogen oxides, polycondensate aromatic products, benzene, sulfur dioxide, carbon monoxide, formaldehyde, acetaldehyde, methanol, ethanol, benzene, ethylbenzene, methylbenzene, nitrogen monoxide and/or nitrogen dioxide.

14. The use according to anyone of claims 11 to 13, which comprises coating solid surfaces with said sol-gel composition.

15. The use according to claim 14, **characterized in that** said solid surfaces are selected from metals, such as steel and aluminum, composite surfaces, such as those used in the furniture, automotive and transport industries in general, glass surfaces, wood surfaces, natural leather, and synthetic leather, artificial or generated from natural waste products, such as, but not limited to, cork or other vegetable products.

**Figure 1**

Europäisches
Patentamt

European
Patent Office

Office européen
des brevets

# EUROPEAN SEARCH REPORT

Application Number

EP 23 18 6148

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2000 303027 A (TOTO LTD) 31 October 2000 (2000-10-31) * paragraph [0001] * * paragraphs [0005] - [0009] * * paragraph [0021] * * paragraphs [0012] - [0017] * * paragraphs [0043] - [0060] * | 1-15 | INV. C23C18/12 C09D5/14 |
| X | JP 2006 136758 A (ASAHI KASEI CHEMICALS CORP) 1 June 2006 (2006-06-01) * paragraph [0001] * * paragraph [0010] * * paragraphs [0014] - [0019] * * paragraphs [0027] - [0030] * * paragraph [0024] * * paragraphs [0048] - [0049] * * paragraph [0052] * * paragraphs [0056] - [0057] * * paragraph [0064] * | 1,3-5,7, 9,11-15 | |
| Y | WO 2010/053459 A1 (UNIVERZA V NOVI GORICI [SI]; CERNIGOJ URH [SI] ET AL.) 14 May 2010 (2010-05-14) * page 1 * * pages 5-8 * * page 10 * * page 12 * | 1-15 | TECHNICAL FIELDS SEARCHED (IPC)  C23C B01J C09G C09D |
| Y | JP 2002 053772 A (NIPPON SODA CO) 19 February 2002 (2002-02-19) * paragraph [0014] * * paragraph [0018] * * paragraph [0028] * * paragraph [0049] * * paragraph [0076] * | 1-15 | |

The present search report has been drawn up for all claims

| Place of search | Date of completion of the search | Examiner |
|---|---|---|
| The Hague | 19 December 2023 | Crottaz, Olivier |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 23 18 6148

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2023

| Patent document cited in search report | | Publication date | Patent family member(s) | | Publication date |
|---|---|---|---|---|---|
| JP 2000303027 | A | 31-10-2000 | JP | 3797037 B2 | 12-07-2006 |
| | | | JP | 2000303027 A | 31-10-2000 |
| JP 2006136758 | A | 01-06-2006 | NONE | | |
| WO 2010053459 | A1 | 14-05-2010 | SI | 22911 A | 31-05-2010 |
| | | | WO | 2010053459 A1 | 14-05-2010 |
| JP 2002053772 | A | 19-02-2002 | JP | 4868636 B2 | 01-02-2012 |
| | | | JP | 2002053772 A | 19-02-2002 |

EPO FORM P0459

For more details about this annex : see Official Journal of the European Patent Office, No. 12/82

## REFERENCES CITED IN THE DESCRIPTION

**Patent documents cited in the description**

- WO 2015145375 A1
- WO 2016207697 A1
- WO 2018002603 A1
- WO 2009013337 A
- WO 2013018059 A

**Non-patent literature cited in the description**

- **ZHU, S.** ; **WANG, D.** *Adv. Energy Mater.*, 2017, vol. 7, 1700841